# FASCICULE DE BREVET EUROPEEN

(11) **EP 0 993 372 B1**
(45) Date de publication et mention de la délivrance du brevet: **17.08.2005**
(21) Numéro de dépôt: 98934994.9
(22) Date de dépôt: 24.06.1998
(51) Int. Cl.: B32B 27/34, B32B 27/18, F16L 11/04

(54) **STRUCTURE MULTICOUCHE A BASE DE POLYAMIDES ET TUBE OU CONDUIT A STRUCTURE MULTICOUCHE**
MEHRSCHICHTIGE STRUKTUR AUF BASIS VON POLYAMIDEN UND ROHR ODER LEITUNG MIT MEHRSCHICHTIGER STRUKTUR
MULTILAYER STRUCTURE BASED ON POLYAMIDES AND TUBE OR CONDUIT WITH MULTILAYER STRUCTURE

(30) Priorité: 03.07.1997 FR 9708688
(43) Date de publication de la demande: 19.04.2000
(73) Titulaire: Rhodia Engineering Plastics Srl, 20020 Ceriano Laghetto (MI) (IT)
(72) Inventeur: PEDUTO, Nicolangelo, I-20031 Cesano Maderno (IT); SPERONI, Franco, I-20020 Ceriano Laghetto (IT)
(74) Mandataire: Esson, Jean-Pierre
(86) Numéro de dépôt international: PCT/EP1998/003859
(87) Numéro de publication internationale: WO 1999/001280

(56) Documents cités:
- EP-A- 0 470 605
- EP-A- 0 527 237
- WO-A-97/12938
- DE-U- 29 519 867
- US-A- 4 828 915
- US-A- 5 219 003
- DATABASE WPI Section Ch, Week 9349 Derwent Publications Ltd., London, GB; Class A17, AN 93-392205 XP002059334 & JP 05 293916 A (TOYOTA CENT RES & DEV LAB), 9 novembre 1993
- DATABASE WPI Section Ch, Week 8504 Derwent Publications Ltd., London, GB; Class A17, AN 85-021105 XP002059335 & JP 59 215352 A (UBE IND LTD) , 5 décembre 1984
- DATABASE WPI Section Ch, Week 8406 Derwent Publications Ltd., London, GB; Class A23, AN 84-033512 XP002059336 & JP 58 222849 A (TORAY IND INC) , 24 décembre 1983
- Encyclopedia of Polymer Science and Engineering, tôme 7 (1987); John Wiley and Sons, New York (US); p. 116, 119
- abrégé PAJ de JP-A-05-293916

## Description

La présente invention concerne une structure multicouche à base de polyamides, notamment convenable pour la fabrication de tubes ou conduits destinés à transporter des fluides liquides comme des aicoois, des carburants liquides, des carburants pouvant contenir des composés oxygénés tels que, par exemple des alcools, ou des fluides réfrigérants.

Elle concerne plus particulièrement une structure multicouche présentant des propriétés barrières améliorées, notamment vis-à-vis des fluides indiqués ci-dessus, et des propriétés élevées de souplesse et de résistance aux conditions d'environnement.

L'utilisation de tubes, conduits en plastique pour le transport de fluide tel que les carburants dans les moteurs à explosion est connue. Par exemple, des tubes ou conduits en polyamide 12 sont souvent utilisés dans les véhicules automobiles.

Toutefois, les normes concernant la construction des véhicules, notamment celles tendant à lutter contre la pollution atmosphérique générée par ceux-ci deviennent de plus en plus contraignantes.

En conséquence, les tubes ou conduits à structure monocouche, par exemple réalisés en polyamide 12 ne peuvent respecter les nouvelles spécifications concernant les émissions de vapeur de carburant dans les automobiles. Ainsi, il devient très difficile de respecter les normes et caractéristiques requises concernant la propriété barrière aux vapeurs de carburant tout en conservant des propriétés mécaniques convenables, telles que la souplesse, la résistance au craquage ou la stabilité dimensionnelle.

Pour remédier à ces inconvénients, il a été proposé des tubes ou conduits à structure multicouche comprenant une couche de polyamide, notamment polyamide 11 ou 12 et une couche de copolymère éthylène/alcool vinylique (voir brevets FR 2 579 290, EP 0 428 834, EP 0 428 833). Toutefois, l'utilisation de ces tubes a démontré qu'ils ne pouvaient répondre à toutes les caractéristiques requises pour l'utilisation dans les moteurs à explosion.

Il a également été proposé une structure multicouche comprenant comme couche externe, une couche en polyamide 11 ou 12 et comme couche interne, une couche en polyfluorovinylidène (par exemple, US 5284184). Dans certains cas, le polyfluorovinylidène est plastifié avec notamment un benzène sulfonamide, dans d'autres cas, tels que celui du précédent brevet, une couche d'adhésion entre les deux couches de polyfluorovinylidène et de polyamide est nécessaire. Toutefois, comme dans le cas précédent, de telles structures ne peuvent pas satisfaire les caractéristiques requises pour l'application principale de celle-ci, par exemple les conduits de carburant des moteurs à explosion. Notamment, elle présente un défaut dans l'adhérence entre les couches, donc une insuffisante cohésion de la structure.

Pour améliorer l'adhérence entre ces couches et donc les propriétés d'ensemble de la structure multicouche, il a été proposé d'utiliser une composition de polyfluorovinylidène comprenant soit un polymère glutarimide (EP 0 637 511) soit un copolymère acrylate comprenant au moins des fonctions anhydrides obtenues par cyclisation de deux fonctions carboxyliques voisines. Toutefois, l'adhérence entre les différentes couches de la structure et les propriétés mécaniques de celle-ci se dégradent au cours du vieillissement.

Par ailleurs, les polyamides de type 6/6.36 présentant une résistance au stress cracking sont mentionnés de la demande WO9712938. Ce document décrit une composition thermoplastique comprenant une matrice en polymère thermoplastique et au moins un composé améliorant la résilience des compositions thermoplastiques, la matrice étant constituée par un mélange d'au moins un premier copolymère thermoplastique polyamide obtenu par copolymérisation de ε-caprolactame avec au moins un des monomères choisis dans le groupe comprenant :
- un aminoacide comprenant au moins 9 atomes de carbone, ou le lactame correspondant, et
- un mélange d'hexaméthylènediamine avec un diacide comprenant au moins 9 atomes de carbone, le rapport pondéral entre l'ε-caprolactame et le total hexaméthylènediamine et diacide et/ou ledit aminoacide étant compris entre 4 et 9 ;
et d'au moins un second polyamide ou copolyamide thermoplastique obtenu par polymérisation de monomères comprenant moins de 9 atomes de carbone. La teneur pondérale du second polymère ou copolymère dans la matrice polymérique est comprise entre 40 et 80 % en poids.
Toutefois, ce polyamide 6/6.36 ne présente pas les propriétés mécaniques requises, notamment
une faible résistance à l'éclatement, ainsi qu'une perméabilité aux carburants insatisfaisante.

Un des buts de la présente invention est de proposer une structure multicouche a propriétés barrière améliorées, une meilleure résistance aux conditions environnantes et présentant un ensemble de propriétés mécaniques convenables pour la fabrication ou réalisation de conduits ou tubes de transport de fluides, notamment des carburants hydrocarbonés. De plus, cette composition présente une remarquable stabilité dimensionnelle quand elle est en contact avec les carburants oxygénés, tels que les carburants contenant de l'alcool.

A cet effet, l'invention propose une structure multicouche comprenant au moins une couche interne et au moins une couche externe superposées. Selon l'invention, au moins la couche interne est formée à partir d'une composition comprenant au moins un polyamide thermoplastique choisi parmi les polyamides 6, polyamides 66 ou leurs copolymères ou des mélanges de ces polyamides avec d'autres polyamides et au moins un agent modificateur de la résistance aux chocs présent à une concentration pondérale comprise entre 10 et 50 % de ladite composition, et en ce qu'au moins la couche externe est formée à partir d'une composition comprenant comme matrice polymérique une composition polyamide choisie dans le groupe comprenant :
(i) un copolymère thermoplastique obtenu par copolymérisation de ε-caprolactame avec au moins un des monomères choisis dans le groupe comprenant :
   - un aminoacide comprenant au moins 9 atomes de carbone, ou le lactame correspondant
   - un mélange d'hexaméthylènediamine avec un diacide comprenant au moins 9 atomes de carbone,
   le rapport pondéral entre l'ε-caprolactame et le total hexaméthylènediamine et diacide et/ou dudit aminoacide étant compris entre 4 et 9, où
(ii) un mélange d'au moins ledit copolymère thermoplastique et d'au moins un second polyamide ou copolyamide thermoplastique obtenu par polymérisation de monomères comprenant moins de 9 atomes de carbone. La teneur pondérale du second polymère ou copolymère dans la matrice polymérique est comprise entre 0 et 80 % en poids, de préférence entre 0 et 40 % en poids.

La composition formant la couche externe comprend également un agent modifiant la résilience présent à une teneur pondérale comprise de préférence entre 5 et 50 % environ de la composition thermoplastique quand celle-ci contient un mélange de copolymère thermoplastique et d'un second polyamide conformément à la définition (ii) ci-dessus.

La structure de l'invention présente deux couches dont les matrices polymériques sont à base de polymères de structures chimiques voisines voire identiques permettant d'obtenir un bon accrochage entre les couches sans utilisation de couche intermédiaire de liaison. En outre, la couche interne présente des propriétés barrières élevées notamment aux mélanges d'hydrocarbures utilisés comme carburant dans les moteurs à explosion interne et une très bonne stabilité dimensionnelle même en présence de composés alcooliques qui peuvent être présents dans les carburants cités ci-dessus. Cette couche interne confère également à la structure de l'invention des propriétés mécaniques élevées de résistance à la traction, élongation à la rupture, résistance aux chocs à froid. Ainsi, la structure de l'invention possède une résistance élevée à l'éclatement sous pression.

La structure de l'invention présente également une résistance élevée à l'agression des conditions extérieures, car la couche externe a une résistance élevée au stress-cracking dans les solutions d'halogénures métalliques et plus particulièrement au test ZnCl₂, et cela même pour une épaisseur de couche faible.

En effet, selon une autre caractéristique de l'invention, l'épaisseur de la couche externe peut être très faible, voire inférieure à 0,1 mm. Toutefois, l'épaisseur de la couche externe n'est pas critique pour obtenir le résultat technique de l'invention. Elle sera déterminée par des contraintes technologiques de fabrication de la structure ou par des contraintes économiques. De préférence, l'épaisseur de la couche externe peut représenter moins de 10 % de l'épaisseur totale de la structure multicouche.

Selon une caractéristique de l'invention, la structure multicouche est sous forme d'un article tubulaire cylindrique ou non. Cet article est généralement fabriqué par mise en oeuvre d'une technique de coextrusion des différentes compositions. Une telle technique est par exemple, décrite dans le brevet européen 0436923.

Dans un mode de réalisation préféré de l'invention, les articles sont des conduits ou tubes qui sont utilisés comme conduits de carburant dans les moteurs à explosion ou combustion interne. Ces articles peuvent également être des containers ou réservoirs devant contenir les carburants cités précédemment, la structure multicouche de l'invention formant les parois de ces récipients.

Selon un autre mode de l'invention, la structure multicouche de l'invention comprend des couches intermédiaires disposées entre les couches interne et externe décrites ci-dessus. Certaines de ces couches intermédiaires sont avantageusement formées à partir d'une composition identique à celle formant la couche externe. Ces couches sont appelées couches intermédiaires de type externe. D'autres couches intermédiaires sont formées à partie d'une composition identique à celle formant la couche interne. De telles couches sont appelées couches intermédiaires de type interne.

Avantageusement, les couches intermédiaires de type interne et de type externe sont disposées de manière alternative dans le sens transversal de la structure.

Par ailleurs sans pour cela sortir du cadre de l'invention, la structure peut comprendre des couches intermédiaires réalisées à partir d'une composition différente de celles utilisées pour former les couches interne et externe.

Dans un mode de réalisation de l'invention, la structure multicouche peut comprendre comme couches extérieures à la structure des couches de type externe, entre ces deux couches extérieures est présent au moins une couche intermédiaire de type interne. Dans la configuration préférée de ce mode de réalisation, la structure est composée de deux couches extérieures de type couche externe et d'une couche intermédiaire de type couche interne qui confèrera les propriétés barrière aux vapeurs de carburant.

Les compositions polyamides thermoplastiques formant la couche interne et les couches intermédiaires de type interne comprennent avantageusement, une matrice à base d'un polymère thermoplastique polyamide tel que décrit précédemment et au moins un agent modificateur de la résistance aux chocs présent à une concentration pondérale comprise entre 10 et 50 % de la composition, le module de la dite composition étant inférieur à 1500 MPa. de préférence inférieur à 1000 MPa.

Les polyamides sont présents dans la composition à une concentration pondérale qui est avantageusement comprise entre 55 % et 70 %.

Les polymères sont les Nylon 6.6. Nylon 6 ou leurs copolymères, ou des mélanges de ces polyamides avec d'autres polyamides.

Selon une autre caractéristique préférentielle de l'invention, la composition formant la couche interne comprend comme autre composant un agent extenseur de chaînes de la matrice polyamide présent à une concentration pondérale comprise entre 0,05 et 5 % de la matrice polyamide.

Selon encore une autre caractéristique préférée de l'invention, la composition comprend un agent plastifiant de la matrice amide présent à une concentration pondérale comprise entre 1 et 20 %, de préférence entre 5 et 10 % de ladite matrice polyamide.

L'agent modifiant la résistance aux chocs de la composition formant la couche externe est avantageusement un composé présentant une Tg inférieure a 0°C, et préférentiellement inférieure à - 20°C. En outre, pour obtenir une composition présentant un très faible module, par exemple inférieur à 1000 MPa, ce composé présente avantageusement un module inférieur à 200 MPa.

Les agents modificateurs préférés de l'invention sont des polyoléfines présentant ou non un caractère élastomérique.

Selon une caractéristique préférée de l'invention, au moins une partie des composés modificateurs de la résilience de la composition comprennent des fonctions polaires capables de réagir avec le polyamide. Ces fonctions polaires peuvent être, par exemple, des fonctions acides, anhydrides, acryliques, méthacryliques ou époxy.

Ces fonctions sont généralement greffées sur la chaîne macromoléculaire des composés.

Comme polyoléfines convenables pour l'invention, on peut citer les polyéthylènes, polypropylènes, polybutylènes ou les copolymères d'éthylène et d'α-oléfines tels que les éthylène / propylène diènes, les copolymères d'éthylène et de propylène.

Comme polymère particulièrement préféré, on peut citer les polyéthylènes à très faible densité connus sous l'appellation ULDPE. Ces composés sont des copolymères d'éthylène et d'α-oléfines comprenant de 4 à 10 atomes de carbone et présentant un indice de fluidité en milieu fondu (indice mesuré sous une charge de 2,16 kg à 190°C selon la norme ASTM D 1238) compris entre 0,1 et 7 g / 10 min., avantageusement entre 0,5 et 7 g / 10 min., de préférence inférieur à 1 g / min. et, une densité inférieure à 0,9 g/cm³, avantageusement comprise entre 0,86 et 0,90 g/cm³.

Avantageusement, le polyéthylène ULDPE comprend des fonctions polaires greffées telles que des fonctions acides ou anhydrides, par exemple des fonctions anhydrides maléïques. La concentration pondérale de ces fonctions polaires dans le polyéthylène ULDPE peut varier dans de larges limites. Par exemple, cette concentration peut être comprise entre 0,01 % et 0,8 % en poids par rapport au poids de polyéthylène. Ces copolymères ULDPE sont connus depuis plusieurs années, ainsi que leurs procédés de fabrication. Ils sont notamment commercialisés par la Société ENICHEM sous la marque "Clearflex CH GO" ®.

Le copolymère greffé avec des fonctions polaires telles que l'anhydride maléique est également connu et décrit notamment dans les demandes de brevets européens n° 0581360 et n° 0 646 247.

La concentration en composé modifiant la résistance aux chocs ou résilience de la composition dépend notamment du niveau désiré de résistance au choc. De manière préférentielle, cette concentration est comprise entre 10 et 50 % en poids de la matrice polyamide, de préférence entre 20 et 40 %.

Les compositions convenables pour former la couche externe et les couches intermédiaires de type externe sont notamment celles décrites dans le brevet européen N° 0588253 et la demande internationale N° WO 97/12938.

Le premier copolyamide thermoplastique est un copolymère correspondant à ceux décrits dans les brevets US 5 256 460 ou EP 0588253.

A titre de copolyamide préféré, on peut citer les copolyamides 6 / 6.36 déjà décrits précédemment, ou les copolymères obtenus à partir des monomères ε-caprolactame, hexaméthylènediamine et diacide undécanoïque.

La composition formant la couche externe et/ou les couches intermédiaires de type externe peut comprendre un premier copolyamide thermoplastique du type 6/6-36, et un second polyamide thermoplastique du type PA 6

Comme composé modifiant la résilience convenable pour l'invention, on peut citer, à titre d'exemple, les ionomères, les polymères ou copolymères de polyoléfines comprenant des groupes fonctionnels tels que des groupes carboxyliques, esters, anhydrides, glycydiles ou carboxylates comme l'anhydride maléique, les acides méthacryliques et acryliques. Ces groupes fonctionnels sont incorporés dans les polyoléfines par copolymérisation ou par greffage. On peut également citer les composés modifiant la résilience cités précédemment pour les compositions formant les couches de type interne.

De tels composés sont connus dans l'état de la technique et décrits dans de nombreuses publications.

Selon une autre caractéristique de l'invention, ces polymères ou copolymères comprenant des groupements fonctionnels peuvent être associés à d'autres composés modifiant la résilience, mais ne comportant pas de groupements fonctionnels permettant un accrochage avec la matrice thermoplastique. On peut citer à titre d'exemple les polymères et copolymères d'oléfines tels que le polyéthylène, le polypropylène, les copolymères d'éthylène et de propylène, les EPDM, EPR, le polystyrène butadiène bloc ou hydrogéné, les copolymères de polyoléfines avec l'acétate de vinyle.

De préférence, les agents modifiant la résilience comprennent toujours au moins un composé comprenant des groupements réactifs greffés tels que décrits ci-dessus, en mélange avec d'autres composés non greffés.

Les compositions formant les couches internes ou externes de la structure de l'invention peuvent également contenir un ou plusieurs autres composants. Ces composants sont des additifs qui ne modifient pas les caractéristiques fondamentales de la composition, mais améliorent sa stabilité chaleur ou lumière, son aptitude au démoulage par exemple.

Ainsi, on peut citer, à titre d'exemple, les stabilisateurs chaleurs tels que les halogénures d'alcalins ou de cuivre, les stabilisateurs lumières tels que les amines, phénols encombrés, les lubrifiants comme les cires, les agents de nucléation.

Bien entendu, les compositions utilisées pour la fabrication de la structure de l'invention peuvent également comprendre des pigments ou colorants, et les autres additifs usuellement employés dans les compositions thermoplastiques pour moulage.

Ces compositions sont préparées selon les méthodes usuelles de fabrication de mélange de polymères avec d'autres additifs, par mélange en milieu fondu des différents composants de la composition, par exemple dans des extrudeuses mono ou bivis.

D'autres buts, avantages et détails de l'invention apparaîtront plus clairement au vu des exemples donnés ci-dessous uniquement à titre indicatif.

Les propriétés améliorées de la structure de l'invention sont illustrées par la réalisation d'un tube de diamètre interne 6 mm et de diamètre externe 8 mm, formé par coextrusion de deux compositions A et B pour obtenir une structure à deux couches superposées conforme à l'invention.

### Exemple 1

La composition A, utilisée pour former la couche externe du tube, a la composition suivante :

| | |
|---|---|
| Copolyamide 6/6-36 NYCOA 2012 ® | 70 % poids |
| Agent modifiant la résilience EXXELOR VA 1803 ® (commercialisé par la société EXXON, le module est inférieur à 100MPa) | 30 % poids |

La composition B formant les couches internes a la composition pondérale suivante :

| | |
|---|---|
| Polyamide 6 (ηrel = 3,8) | 64,4% |
| Agent modifiant la résilience (PRIMEFLEX® AFG4W) (commercialisé par la société ENICHEM et présentant un module inférieur à 100MPa) | 28,0 % |
| Plastifiant (N-BBSA ou N-butyl benzène sulfonamide) | 7,0 % |
| Antioxydant | 0,30 % |
| Lubrifiant (stéarate de calcium) | 0,30 % |

La couche externe a une épaisseur 0,3 mm, l'épaisseur de la couche interne étant de 0,7 mm.

Un tube d'épaisseur de couche équivalente, c'est à dire égale à 1 mm, est fabriquée à partir d'une composition à base de Polyamide 12.

Les propriétés des deux tubes ont été déterminées et sont rassemblées dans le tableau I ci-dessous :

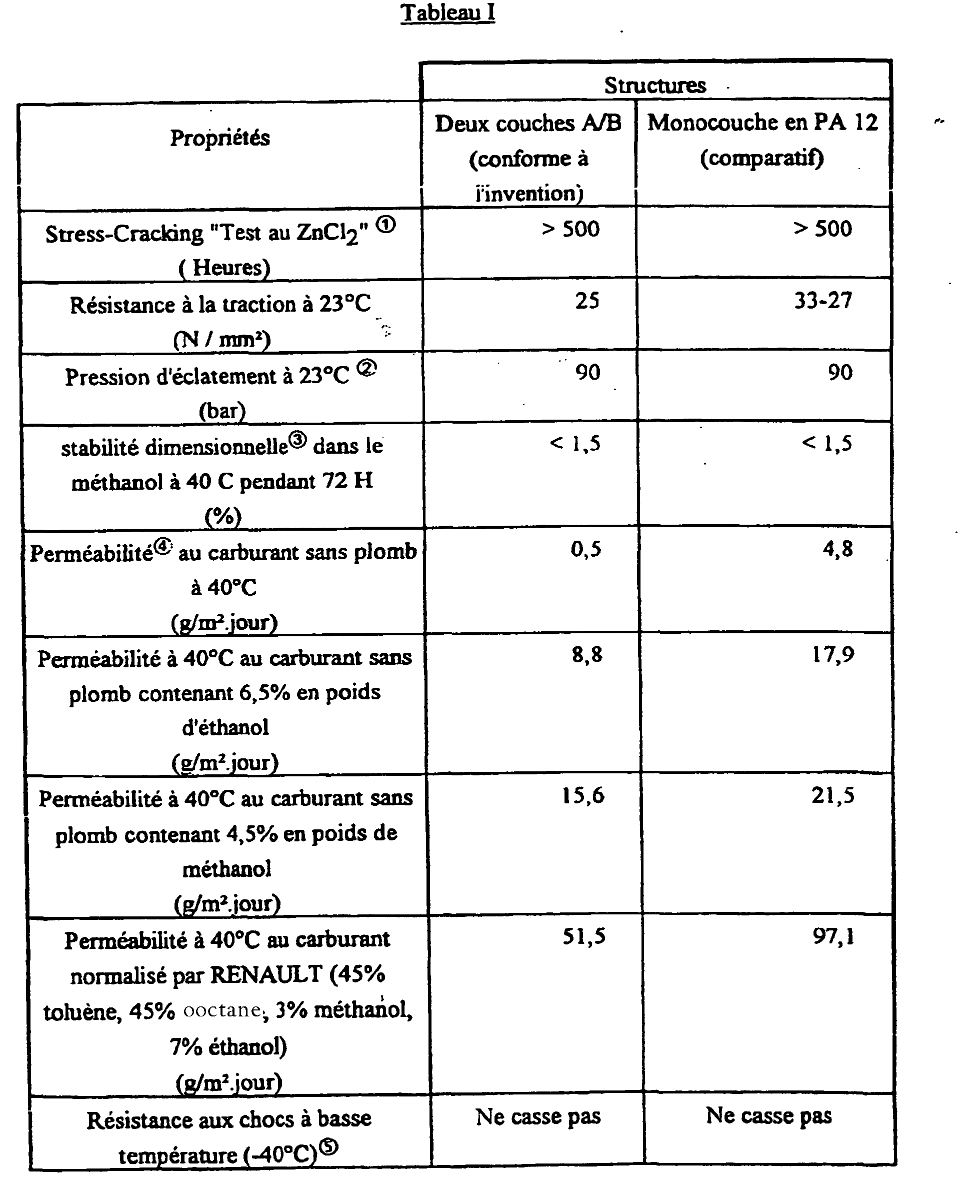

les propriétés ci-dessus sont déterminées selon des méthodes normalisées dont certaines sont données ci-dessous.
① La détermination de la résistance au "Stress Cracking" dans une solution de ZnCl₂ est réalisée selon la procédure décrite dans la norme internationale SAE J 844 émise en juin 1963 et révisée le 12 juin 1990. Ce test consiste à soumettre un tube de diamètre intérieur de 6 mm et de diamètre extérieur de 8 mm, extrudé avec le matériau à tester, à une courbure de rayon déterminé et d'immerger le tube ainsi courbé dans une solution fraîche à 50 % en poids de chlorure de zinc pendant 200 heures à 24°C. Après retrait du tube de la solution, aucune fissure ne doit apparaître sur la surface externe de celui-ci-
② La pression d'éclatement est également déterminée selon la procédure décrite dans la norme SAE J 844 citée précédemment, et consiste à déterminer à quelle pression un tube éclate après maintien de la pression pendant une durée de 3 à 15 secondes.
③ L'élongation dans le méthanol est déterminée sur les tubes extrudés selon le test suivant : des barres rondes métalliques de diamètre externe sensiblement égal au diamètre interne des tubes à tester sont introduites à l'intérieur des morceaux de tubes de longueur au moins égale à 300 mm, pour éviter toute déformation, par exemple flexion ou torsion, des tubes à tester.
   L'ensemble est conditionné par maintien pendant 48 heures dans une chambre à une température de 80°C. Ensuite l'ensemble est amené à température ambiante et la barre ronde est extraite. Le tube est ensuite fixé sur un équipement permettant de mettre et maintenir les tubes en communication avec un réservoir contenant du méthanol. Des marques sont réalisées sur le tube et leur position est déterminée. Une quantité déterminée de méthanol est introduite dans les tubes, cette quantité sera maintenue sensiblement constante pendant toute l'opération par addition automatique à partir du réservoir précité. L'ensemble est ensuite chauffé et maintenu à 40°C pendant 72 heures. Après arrêt du chauffage, l'ensemble revient à température ambiante en 2 à 3 heures. La nouvelle position des marques sur le tube est déterminée. Le pourcentage d'allongement dans le méthanol est calculé par comparaison des positions initiales et finales des marques.
④ La perméabilité des tubes fabriqués est évaluée par une méthode statique. Un échantillon de tube de longueur 300 mm est fermé à une de ses extrémités avec un bouchon de NYLON recouvert par une colle résistante au carburant. Le tube est connecté par son autre extrémité à un réservoir de carburant d'une capacité de 25 cm³, pour ainsi maintenir constante la composition du carburant dans le tube. Le tube est conditionné en température et en imprégnation de fluide pour ainsi obtenir une mesure directe de la perméabilité. Les essais sont réalisés à 40°C et la diffusion est déterminée par la perte de poids pendant une durée déterminée, par exemple après des durées de 24 heures.
   Ainsi, la perméabilité correspond à la vitesse de perte de poids de l'échantillon déterminée quand la perte de poids pour des durées successives est constante.
   Le carburant utilisé est un carburant sans plomb appelé "FUEL C".
   La contrainte de traction à la rupture est déterminé par dynamométrie sur des morceaux de tube ayant une longueur de 200 mm. Pour éviter toute déformation des tubes dans les mâchoires du dynamomètre, on insère deux barres rondes métalliques aux extrémités des tubes; ces barres ayant une longueur équivalente au trait de tube serré dans la mâchoire et un diamètre sensiblement égal au diamètre interne des tubes.
⑤ La résistance aux chocs à -40°C est déterminée selon le protocole suivant : L'appareil détermine l'impact de la chute libre d'une masse de 1 Kg tombant d'une hauteur de 400 mm sur l'échantillon. La masse est en forme de tige de diamètre 27 mm avec une extrémité présentant une courbure de 9 mm. L'échantillon est fixé par ces extrémités dans un support présentant un alésage de forme conjuguée avec l'extrémité de la masse. La partie inférieure de l'échantillon est située à 6 mm au-dessu du fond de l'alésage.

### Exemple 2

Un tube identique à celui décrit dans l'exemple 1 est réalisé en utilisant comme composition A un mélange comprenant 70% en poids d'un copolyamide 6/6.36 commercialisé sous la marque NYCOA 2012 et 30% en poids d'un Agent modifiant la résilience, commercialisé sous le nom PRIMEFLEX® AFG4W . La composition B est identique à celle de l'exemple 1.

Les propriétés du tube sont rassemblées dans le tableau II ci-dessous :

**Tableau II**

| Propriétés | Deux couches A/B (conforme à l'invention) |
|---|---|
| Stress-Cracking "Test au ZnCl₂"① (Heures) | > 500 |
| Résistance à la traction à 23°C (N / mm²) | 23 |
| Pression d'éclatement à 23°C② (bar) | 85 |
| stabilité dimensionnelle③ dans le méthanol à 40 C pendant 72 H (%) | < 1,5 |
| Perméabilité④ au carburant sans plomb à 40°C (g/m².jour) | 0,5 |
| Résistance aux chocs à basse température (40°C) | Ne casse pas |

### Exemple 3

De manière identique à l'exemple 1, un tube bicouche est réalisé en utilisant les compositions A et B suivantes :

| - Composition A : | |
|---|---|
| Copolyamide 6/6.36 NYCOA 2012 | 70% en poids |
| Agent modifiant la résilience EXXELOR VA 1803 (commercialisé par la société EXXON, le module est inférieur à 100MPa) | 30% en poids |

| - Composition B : | |
|---|---|
| Polyamide 6 (ηrel = 3,8) | 66,4% |
| Agent modifiant la résilience (EXXELOR® VA 1801) (commercialisé par la société EXXON, le module est inférieur à 100MPa) | 25,0 % |
| Plastifiant (N-BBSA ou N-butyl benzène sulfonamide) | 8,0 % |
| Antioxydant | 0,30 % |
| Lubrifiant (stéarate de calcium) | 0,30 % |

Les propriétés du tube sont rassemblées dans le tableau III ci-dessous :

**Tableau III**

| Propriétés | Deux couches A/B (conforme à l'invention) |
|---|---|
| Stress-Cracking "Test au ZnCl₂"① (Heures) | > 500 |
| Résistance à la traction à 23°C (N / mm²) | 30 |
| Pression d'éclatement à 23°C② (bar) | 95 |
| stabilité dimensionnelle③ dans le méthanol à 40 C pendant 72 H (%) | < 1,5 |
| Perméabilité④ au carburant sans plomb à 40°C (g/m².jour) | 0,3 |
| Résistance aux chocs à basse température (-40°C) | Ne casse pas |

### Exemple 4

De manière identique à l'exemple 1, un tube bicouche est réalisé en utilisant les compositions A et B suivantes :

| - Composition A : | |
|---|---|
| Copolyamide 6/6.36 NYCOA 2012 | 70% en poids |
| Agent modifiant la résilience (EXXELOR® VA 1801) | 30% en poids |

| - Composition B : | |
|---|---|
| Polyamide 6 (ηrel = 3,8) | 66,4% |
| Agent modifiant la résilience (EXXELOR® VA 1801) | 25,0 % |
| Plastifiant (N-BBSA ou N-butyl benzène sulfonamide) | 8,0 % |
| Antioxydant | 0,30 % |
| Lubrifiant (stéarate de calcium) : | 0,30 % |

Les propriétés du tube sont rassemblées dans le tableau IV ci-dessous :

**Tableau IV**

| Propriétés | Deux couches A/B (conforme à l'invention) |
|---|---|
| Stress-Cracking "Test au ZnCl₂"① (Heures) | > 500 |
| Résistance à la traction à 23°C (N / mm²) | 30 |
| Pression d'éclatement à 23°C② (bar) | 95 |
| stabilité dimensionnelle③ dans le méthanol à 40 C pendant 72 H (%) | < 1,5 |
| Perméabilité④ au carburant sans plomb à 40°C (g/m².jour) | 0,3 |
| Résistance aux chocs à basse température (-40°C) | Ne casse pas |

### Exemple 5

De manière identique à l'exemple 1, un tube bicouche est réalisé en utilisant les compositions A et B suivantes :

| - Composition A : | |
|---|---|
| Copolyamide 6/6.36 NYCOA 2012 | 70% en poids |
| Agent modifiant la résilience EXXELOR VA 1801 | 30% en poids |

| - Composition B : | |
|---|---|
| Polyamide 6 (ηrel = 3,8) | 66,4% |
| Agent modifiant la résilience (EXXELOR® VA 1803) | 25,0 % |
| Plastifiant (N-BBSA ou N-butyl benzène sulfonamide) | 8,0 % |
| Antioxydant | 0,30 % |
| Lubrifiant (stéarate de calcium) | 0,30 % |

Les propriétés du tube sont rassemblées dans le tableau V ci-dessous :

**Tableau V**

| Propriétés | Deux couches A/B (conforme à l'invention) |
|---|---|
| Stress-Cracking "Test au ZnCl₂"① (Heures) | > 500 |
| Résistance à la traction à 23°C (N / mm²) | 30 |
| Pression d'éclatement à 23°C② (bar) | 95 |
| stabilité dimensionnelle③ dans le méthanol à 40 C pendant 72 H (%) | < 1,5 |
| Perméabilité④ au carburant sans plomb à 40°C (g/m².jour) | 0,3 |
| Résistance aux chocs à basse température (-40°C) | Ne casse pas |

## Revendications

1. Structure multicouche comprenant au moins une couche interne et au moins une couche externe, dans laquelle au moins la couche interne est formée à partir d'une composition comprenant au moins un polyamide thermoplastique choisi parmi les polyamides 6, polyamides 66 ou leurs copolymères ou des mélanges de ces polyamides avec d'autres polyamides et au moins un agent modificateur de la résistance aux chocs présent à une concentration pondérale comprise entre 10 et 50 % de ladite composition, et en ce qu'au moins la couche externe est formée à partir d'une composition comprenant comme matrice polymérique une composition polyamide choisie dans le groupe comprenant :
(i) un copolymère thermoplastique polyamide obtenu par copolymérisation de ε-caprolactame avec au moins un des monomères choisis dans le groupe comprenant :
• un aminoacide comprenant au moins 9 atomes de carbone, ou le lactame correspondant
• un mélange d'hexaméthylènediamine avec un diacide comprenant au moins 9 atomes de carbone, le rapport pondéral entre l'ε-caprolactame et le total hexaméthylènediamine et diacide et/ou ledit aminoacide étant compris entre 4 et 9,
(ii) un mélange d'au moins ledit copolymère polyamide thermoplastique (i) et d'au moins un second polyamide ou copolyamide thermoplastique obtenu par polymérisation de monomères comprenant moins de 9 atomes de carbone, la teneur pondérale du second polymère ou copolymère dans la matrice polymérique est comprise entre 0 et 80 % en poids ;
la composition formant la couche externe comprend un agent modifiant la résilience quand celle-ci contient un mélange de copolymère thermoplastique et d'un second polyamide conformément à la définition (ii) ci-dessus.

2. Structure selon la revendication 1, **caractérisée en ce que** la teneur en agent modifiant la résilience présent dans la couche externe quand la matrice polymèrique est formée par le mélange (ii), est comprise entre 5 % et 50 % en poids de la composition thermoplastique formant ladite couche.

3. Structure selon l'une des revendications 1 à 2, **caractérisée en ce qu'**elle forme un conduit, un tube, ou les parois d'une enceinte.

4. Structure selon l'une des revendications 1 à 3, **caractérisée en ce qu'**elle comprend des couches intermédiaires disposées entre les couches externe et interne.

5. Structure selon la revendication 4, **caractérisée en ce que** certaines desdites couches intermédiaires sont formées à partir d'une composition semblable à celle formant la couche externe de la structure.

6. Structure selon la revendication 4, **caractérisée en ce que** certaines des couches intermédiaires sont formées à partir d'une composition semblable à celle formant la couche interne.

7. Structure selon l'une des revendications 4 à 6, **caractérisée en ce que** les couches intermédiaires de type interne et les couches intermédiaires de type externe sont disposées de manière alternative dans le sens transversal de la structure.

8. Structure selon l'une des revendications 4 à 7, **caractérisée en ce qu'**ele comprend des couches extérieures formées par une composition semblable à celle formant la couche externe, et au moins une couche intermédiaire formée par une composition du type de celle formant les couches de type interne.

9. Structure selon l'une des revendications précédentes, **caractérisée en ce que** la composition formant la couche externe et/ou les couches intermédiaires de type externe comprend un premier copolyamide thermoplastique du type 6/6-36, et un second polyamide therrmoplastique du type PA 6.

10. Structure selon l'une des revendications précédentes, **caractérisée en ce que** la composition formant la couche externe et/ou les couches intermédiaires de type externe comprend un agent modifiant la résilience, avantageusement cet agent comprenant des groupes fonctionnels pouvant réagir avec le ou les polyamide.

11. Structure selon l'une des revendications précédentes, **caractérisée en ce que** la composition formant la couche interne et/ou les couches intermédiaires de type interne a un module inférieur à 1500MPa, de préférence inférieur à 1000 MPa.

12. Structure selon l'une des revendications précédentes, **caractérisée en ce que** la composition formant la couche interne comprend un agent extenseur de chaîne de la matrice polyamide présent à une concentration pondérale comprise entre 0,05% et 5% de la matrice polyamide

13. Structure selon l'une des revendications précédentes, **caractérisée en ce que** l'agent modificateur de la résilience contenu dans la composition formant la couche interne est choisi dans le groupe comprenant des composés présentant une Tg inférieure à 0°C et un module inférieur à 200 Mpa.

14. Structure selon la revendication 13, **caractérisée en ce que** ledit agent modificateur de la résilience est un composé choisi dans le groupe des polyoléfines.

15. Structure selon la revendication 13 ou 14, **caractérisée en ce qu'**au moins une partie des agents modificateurs de la résilience comprennent des fonctions polaires capables de réagir avec la matrice polyamide.

16. Structure selon la revendication 15, **caractérisée en ce que** les fonctions polaires sont choisies dans le groupe comprenant les fonctions acides, anhydrides, acryliques, méthacryliques, époxy.

17. Structure selon l'une des revendications 14 à 16, **caractérisée en ce que** l'agent modificateur de résilience est un polyéthylène à très faible densité (ULDPE) présentant une densité inférieure à 0,9 et un indice de fluidité en milieu fondu compris entre 0,1 et 7 g / 10 min. mesuré à 190°C sous une charge de 2,16 Kg, de préférence inférieur à 1 g / 10 min.

18. Structure selon l'une des revendications précédentes, **caractérisée en ce que** la composition formant la couche interne et/ou les couches intermédiaires de type interne comprend un agent plastifiant du polyamide présent à une concentration pondérale comprise entre 1 et 20% en poids par rapport à la matrice polyamide, de préférence entre 5 et 10%.

19. Tube ou conduit **caractérisé en ce que** la paroi de ce tube ou conduit a une structure multicouche selon l'une des revendications précédentes.

## Claims

1. Multilayer structure comprising at least one internal layer and at least one external layer, in which at least the internal layer is formed from a composition comprising at least one thermoplastic polyamide selected from nylon-6 polyamides, nylon-6,6 polyamides or copolymers thereof, or blends of these polyamides with other polyamides and at least one impact-resistance modifier present at a concentration by weight of between 10 and 50% of the said composition, and in that at least the external layer is formed from a composition comprising as polymer matrix a polyamide composition selected from the group comprising:
(i) a polyamide thermoplastic copolymer obtained by copolymerization of ε-caprolactam with at least one of the monomers selected from the group comprising:
• an amino acid comprising at least 9 carbon atoms, or the corresponding lactam
• a mixture of hexamethylenediamine with a diacid comprising at least 9 carbon atoms,
the ratio by weight between the ε-caprolactam and the total amount of hexamethylenediamine and diacid and/or the said amino acid being between 4 and 9,
(ii) a blend of at least the said thermoplastic polyamide copolymer (i) and at least one second thermoplastic polyamide or copolyamide obtained by polymerization of monomers comprising fewer than 9 carbon atoms, the content by weight of the second polymer or copolymer in the polymer matrix is between 0 and 80% by weight; the composition forming the external layer comprises an impact modifier when this composition contains a blend of a thermoplastic copolymer and a second polyamide according to definition (ii) above.

2. Structure according to Claim 1, **characterized in that** the content of impact modifier present in the external layer when the polymer matrix is formed by the blend (ii) is between 5% and 50% by weight of the thermoplastic composition forming the said layer.

3. Structure according to either of Claims 1 to 2, **characterized in that** it forms a pipe, a tube or the walls of a chamber.

4. Structure according to one of Claims 1 to 3, **characterized in that** it comprises intermediate layers arranged between the external and internal layers.

5. Structure according to Claim 4, **characterized in that** some of the said intermediate layers are formed from a composition similar to the one forming the external layer of the structure.

6. Structure according to Claim 4, **characterized in that** some of the intermediate layers are formed from a composition similar to the one forming the internal layer.

7. Structure according to one of Claims 4 to 6, **characterized in that** the internal-type intermediate layers and the external-type intermediate layers are arranged alternately in the transverse direction of the structure.

8. Structure according to one of Claims 4 to 7, **characterized in that** it comprises outer layers formed by a composition similar to the one forming the external layer, and at least one intermediate layer formed by a composition of the type forming the internal-type layers.

9. Structure according to one of the preceding claims, **characterized in that** the composition forming the external layer and/or the external-type intermediate layers comprises a first thermoplastic copolyamide of the 6/6-36 type, and a second thermoplastic polyamide of the PA 6 type.

10. Structure according to one of the preceding claims, **characterized in that** the composition forming the external layer and/or the external-type intermediate layers comprises a impact modifier, this modifier advantageously comprising functional groups which can react with the polyamide or polyamides.

11. Structure according to one of the preceding claims, **characterized in that** the composition forming the internal layer and/or the internal-type intermediate layers has a modulus of less than 1500 MPa, preferably less than 1000 MPa.

12. Structure according to one of the preceding claims, **characterized in that** the composition forming the internal layer comprises a chain extender for the polyamide matrix, which is present at a concentration by weight of between 0.05% and 5% of the polyamide matrix.

13. Structure according to one of the preceding claims, **characterized in that** the impact modifier contained in the composition forming the internal layer is selected from the group comprising compounds having a Tg below 0°C and a modulus of less than 200 MPa.

14. Structure according to Claim 13, **characterized in that** the said impact modifier is a compound selected from the polyolefin group.

15. Structure according to Claim 13 or 14, **characterized in that** at least some of the impact modifiers comprise polar functional groups capable of reacting with the polyamide matrix.

16. Structure according to Claim 15, **characterized in that** the polar functional groups are selected from the group comprising acid, anhydride, acrylic, methacrylic and epoxy functional groups.

17. Structure according to one of Claims 14 to 16, **characterized in that** the impact modifier is an ultra-low-density polyethylene (ULDPE) having a density of less than 0.9 and a melt flow index of between 0.1 and 7 g/10 min measured at 190°C under a load of 2.16 kg, preferably of less than 1 g/10 min.

18. Structure according to one of the preceding claims, **characterized in that** the composition forming the internal layer and/or the internal-type intermediate layers comprises a plasticizer for the polyamide, which is present at a concentration by weight of between 1 and 20% by weight relative to the polyamide matrix, preferably between 5 and 10%.

19. Tube or pipe **characterized in that** the wall of this tube or pipe has a multilayer structure according to one of the preceding claims.

## Patentansprüche

1. Mehrschichtige Struktur, umfassend mindestens eine innere Schicht und mindestens eine äußere Schicht, bei der mindestens die innere Schicht ausgehend von einer Zusammensetzung gebildet wird, die mindestens ein thermoplastisches Polyamid umfaßt, ausgewählt unter den Polyamiden 6, den Polyamiden 66 oder ihren Copolymeren oder den Mischungen dieser Polyamide mit anderen Polyamiden und mindestens einem Mittel für die Modifizierung der Schlagfestigkeit, das in einer gewichtsmäßigen Konzentration zwischen 10 % und 50 % der genannten Zusammensetzung anwesend ist, und dadurch, daß mindestens die äußere Schicht ausgehend von einer Zusammensetzung gebildet wird, die als Polymermatrix eine Polyamid-Zusammensetzung umfaßt, gewählt aus der Gruppe, die umfaßt:
(i) ein thermoplastisches Polyamid-Copolymer, erhalten durch Copolymerisation von ε-Caprolactam mit mindestens einem der Monomeren, gewählt aus der Gruppe, die umfaßt:
• eine Aminosäure, umfassen mindestens 9 Kohlenstoffatome, oder das entsprechende Lactam,
• eine Mischung von Hexamethylendiamin mit einer Disäure, umfassend mindestens 9 Kohlenstoffatome,
wobei das Gewichtsverhältnis zwischen ε-Caprolactam und der Gesamtheit von Hexamethylendiamin und Disäure und/oder der genannten Aminosäure zwischen 4 und 9 beträgt,
(ii) eine Mischung von mindestens dem genannten thermoplastischen Polyamid-Copolymer (i) und mindestens einem zweiten thermoplastischen Polyamid oder Copolyamid, erhalten durch Polymerisation von Monomeren, die mindestens 9 Kohlenstoffatome umfassen, wobei der gewichtsmäßige Gehalt des zweiten Polymers oder Copolymers in der Polymermatrix zwischen 0 Gew.-% und 80 Gew.-% beträgt; und wobei die Zusammensetzung, welche die äußere Schicht bildet, ein Mittel zur Modifizierung der Kerbschlagzähigkeit umfaßt, wenn diese eine Mischung von thermoplastischem Copolymer und einem zweiten Polyamid in Übereinstimmung mit der obigen Definition (ii) umfaßt.

2. Struktur nach Anspruch 1, **dadurch gekennzeichnet, daß** der Gehalt an dem Mittel zur Modifizierung der Kerbschlagzähigkeit, das in der äußeren Schicht anwesend ist, wenn die Polymermatrix durch die Mischung (ii) gebildet wird, zwischen 5 Gew.-% und 50 Gew.-% der thermoplastischen Zusammensetzung beträgt, welche die genannte Schicht bildet.

3. Struktur nach einem der Ansprüche 1 bis 2, **dadurch gekennzeichnet, daß** sie eine Leitung, ein Rohr oder die Wandungen eines Behälters bildet.

4. Struktur nach einem der Ansprüche 1 bis 3, **dadurch gekennzeichnet, daß** sie Zwischenschichten umfaßt, die zwischen der äußeren und der inneren Schicht angeordnet sind.

5. Struktur nach Anspruch 4, **dadurch gekennzeichnet, daß** einige der genannten Zwischenschichten ausgehend von einer ähnlichen Zusammensetzung gebildet werden, wie der, welche die äußere Schicht der Struktur bildet.

6. Struktur nach Anspruch 4, **dadurch gekennzeichnet, daß** einige der genannten Zwischenschichten ausgehend von einer ähnlichen Zusammensetzung gebildet werden, wie der, welche die innere Schicht bildet.

7. Struktur nach einem der Ansprüche 4 bis 6, **dadurch gekennzeichnet, daß** die Zwischenschichten vom inneren Typ und die Zwischenschichten vom äußeren Typ in alternativer Weise in Richtung des Querschnitts der Struktur angeordnet sind.

8. Struktur nach einem der Ansprüche 4 bis 7, **dadurch gekennzeichnet, daß** sie äußere Schichten umfaßt, gebildet durch eine ähnliche Zusammensetzung wie die, welche die äußere Schicht bildet, und mindestens eine Zwischenschicht, gebildet durch eine Zusammensetzung von dem Typ, welche die Schichten vom inneren Typ bildet.

9. Struktur nach einem der vorstehenden Ansprüche, **dadurch gekennzeichnet, daß** die Zusammensetzung, welche die äußere Schicht und/oder die Zwischenschichten vom äußeren Typ bildet, ein erstes thermoplastisches Copolyamid vom Typ 6/6-36 und ein zweites thermoplastisches Polyamid vom Typ PA 6 umfaßt.

10. Struktur nach einem der vorstehenden Ansprüche, **dadurch gekennzeichnet, daß** die Zusammensetzung, welche die äußere Schicht und/oder die Zwischenschichten vom äußeren Typ bildet, ein Mittel zur Modifizierung der Kerbschlagzähigkeit umfaßt, wobei dieses Mittel vorteilhafterweise funktionelle Gruppen umfaßt, die mit dem oder den Polyamid(en) reagieren können.

11. Struktur nach einem der vorstehenden Ansprüche, **dadurch gekennzeichnet, daß** die Zusammensetzung, welche die innere Schicht und/oder die Zwischenschichten vom inneren Typ bildet, ein Modul von unter 1500 MPa, vorzugsweise unter 1000 MPa besitzt.

12. Struktur nach einem der vorstehenden Ansprüche, **dadurch gekennzeichnet, daß** die Zusammensetzung, welche die innere Schicht bildet, ein Mittel zum Strecken der Kette der Polyamidmatrix umfaßt, das in einer gewichtsmäßigen Konzentration zwischen 0,05 % und 5 % der Polyamidmatrix anwesend ist.

13. Struktur nach einem der vorstehenden Ansprüche, **dadurch gekennzeichnet, daß** das Mittel zur Modifizierung der Kerbschlagzähigkeit, das in der Zusammensetzung enthalten ist, welche die innere Schicht bildet, aus der Gruppe gewählt wird, die Verbindungen umfaßt, welche eine Tg von unter 0 °C und einen Modul von unter 200 MPa aufweisen.

14. Struktur nach Anspruch 13, **dadurch gekennzeichnet, daß** das genannte Mittel zur Modifizierung der Kerbschlagzähigkeit eine Verbindung ist, die aus der Gruppe der Polyolefine gewählt wird.

15. Struktur nach Anspruch 13 oder 14, **dadurch gekennzeichnet, daß** mindestens ein Teil der Mittel zur Modifizierung der Kerbschlagzähigkeit polare Funktionen umfaßt, die fähig sind, mit der Polyamidmatrix zu reagieren.

16. Struktur nach Anspruch 15, **dadurch gekennzeichnet, daß** die polaren Funktionen aus der Gruppe gewählt werden, die Säurefunktionen, Anhydridfunktionen, Acrylfunktionen, Methacrylfunktionen und Epoxyfunktionen umfaßt.

17. Struktur nach einem der Ansprüche 14 bis 16, **dadurch gekennzeichnet, daß** das Mittel zur Modifizierung der Kerbschlagzähigkeit ein Polyethylen mit sehr niedriger Dichte (ULDPE) ist, das eine Dichte von unter 0,9 und einen Fluiditätsindex im geschmolzenen Medium zwischen 0,1 und 7 g/10 min, vorzugsweise von unter 1 g/10 min aufweist, gemessen bei 190 °C unter einer Last von 2,16 kg.

18. Struktur nach einem der vorstehenden Ansprüche, **dadurch gekennzeichnet, daß** die Zusammensetzung, welche die innere Schicht und/oder die Zwischenschichten vom inneren Typ bildet, einen Weichmacher für das Polyamid umfaßt, der in einer gewichtsmäßigen Konzentration zwischen 1 Gew.-% und 20 Gew.-%, vorzugsweise zwischen 5 Gew.-% und 10 Gew.-% anwesend ist, bezogen auf die Polyamidmatrix.

19. Rohr oder Leitung, **dadurch gekennzeichnet, daß** die Wandung von diesem Rohr oder dieser Leitung aus einer mehrschichtigen Struktur nach einem der vorstehenden Ansprüche besteht.
